# NEUE EUROPÄISCHE PATENTSCHRIFT

(11) **EP 1 853 763 B2**
(45) Veröffentlichungstag und Bekanntmachung des Hinweises auf die Entscheidung über den Einspruch: **27.06.2018**
(45) Hinweis auf die Patenterteilung: 19.08.2009
(21) Anmeldenummer: 06706800.7
(22) Anmeldetag: 10.02.2006
(51) Int. Cl.: B42D 15/00, D21H 21/44, G02B 3/00

(54) **SICHERHEITSELEMENT UND VERFAHREN ZU SEINER HERSTELLUNG**
SECURITY ELEMENT AND METHOD FOR THE PRODUCTION THEREOF
ELEMENT DE SECURITE ET PROCEDE DE PRODUCTION DE CET ELEMENT

(30) Priorität: 18.02.2005 DE 102005007749; 17.06.2005 DE 102005028162
(43) Veröffentlichungstag der Anmeldung: 14.11.2007
(73) Patentinhaber: Giesecke+Devrient Currency Technology GmbH, 81677 München (DE)
(72) Erfinder: KAULE, Wittich, 82275 Emmering (DE); HEIM, Manfred, 81543 München (DE); DICHTL, Marius, 81371 München (DE); HOFFMÜLLER, Winfried, 83646 Bad Tölz (DE)
(74) Vertreter: Zeuner Summerer Stütz
(86) Internationale Anmeldenummer: PCT/EP2006/001169
(87) Internationale Veröffentlichungsnummer: WO 2006/087138

(56) Entgegenhaltungen:
- EP-A- 0 238 043
- EP-A1- 1 241 022
- EP-A2- 0 201 323
- EP-A2- 0 319 157
- EP-A2- 1 695 121
- EP-A2- 1 747 099
- WO-A-99/26793
- WO-A1-01/07268
- WO-A1-01/63341
- WO-A1-94/27254
- WO-A1-97/19820
- WO-A1-03/053713
- WO-A1-2006/029745
- WO-A2-03/082598
- WO-A2-2005/052650
- WO-A2-2005/106601
- WO-A2-2006/125224
- DE-A1- 10 044 465
- DE-A1- 10 226 114
- DE-A1- 10 308 305
- US-A- 4 183 989
- US-A- 4 758 296
- US-A- 5 465 301
- US-A- 5 693 126
- US-A- 5 712 731
- US-A1- 2002 014 967
- US-A1- 2003 179 364
- US-A1- 2003 193 183
- US-A1- 2004 100 707
- US-A1- 2005 170 259
- US-B1- 6 381 071

## Beschreibung

Die Erfindung betrifft ein Sicherheitselement zur Absicherung von Wertgegenständen. Die Erfindung betrifft ferner ein Verfahren zum Herstellen eines derartigen Sicherheitselements, ein Sicherheitspapier sowie einen Wertgegenstand, der mit einem solchen Sicherheitselement ausgestattet ist.

Wertgegenstände, wie etwa Markenartikel oder Wertdokumente, werden zur Absicherung oft mit Sicherheitselementen ausgestattet, die eine Überprüfung der Echtheit des Wertgegenstands gestatten und die zugleich als Schutz vor unerlaubter Reproduktion dienen.

Die Sicherheitselemente können beispielsweise in Form eines in eine Banknote eingebetteten Sicherheitsfadens, eines Aufreißfadens für Produktverpackungen, eines aufgebrachten Sicherheitsstreifens oder eines selbsttragenden Transferelements ausgebildet sein, wie einem Patch oder einem Etikett, das nach seiner Herstellung auf ein Wertdokument aufgebracht wird.

Um die Nachstellung der Sicherheitselemente selbst mit hochwertigen Farbkopiergeräten zu verhindern, weisen die Sicherheitselemente vielfach optisch variable Elemente auf, die dem Betrachter unter unterschiedlichen Betrachtungswinkeln einen unterschiedlichen Bildeindruck vermitteln und etwa einen unterschiedlichen Farbeindruck oder unterschiedliche graphische Motive zeigen.

In diesem Zusammenhang ist bekannt, Sicherheitselemente mit Sicherheitsmerkmalen in Form beugungsoptisch wirksamer Mikro- und Nanostrukturen auszustatten, wie z. B. mit konventionellen Prägehologrammen oder Gitterstrukturen, wie Kinegram® und Pixelgram, und dergleichen. Der Fälschungsschutz dieser Elemente beruht auf dem vom Betrachtungswinkel abhängigen Farbspiel, das diese Elemente zeigen. Derartige Sicherheitselemente werden häufig in Form von Folienstreifen oder Folienetiketten auf der Oberfläche von Wertdokumenten aufgebracht.

Die Druckschrift EP 0 330 733 A1 beschreibt derartige beugungsoptische Strukturen im Zusammenhang mit Sicherheitsfäden. Die beugungsoptischen Strukturen liegen hier beispielsweise direkt als Prägungen im Trägermaterial eines Kunststofffadens vor oder in einer zusätzlichen Schicht. Die bei Reflexionshologrammen oder Gittern vorhandene reflektierende Metallschicht kann für die Erzeugung eines im Durchlicht sichtbaren Schriftzuges oder Musters unterbrochen sein.

Als Absicherung gegen Fälschungen von Wertdokumenten sind ferner auch Sicherheitselemente bekannt, bei denen ein dreidimensionales Hologramm und eine zweidimensionale Beugungsstruktur überlagert sind. Ein Verfahren zur Herstellung derartiger "2D-/3D-Hologramme" ist beispielsweise in der Druckschrift EP 0 064 067 A1 beschrieben.

Da derartige Hologramme inzwischen nicht nur als Sicherheitselement, sondern in sicherheitstechnisch unkritischen Anwendungen häufig rein dekorativ Verwendung finden, lässt die Aufmerksamkeit des Betrachters gegenüber als Sicherheitselementen eingesetzten Hologrammen nach. Der visuelle Effekt wird vom Betrachter nicht mehr als Sicherheitsmerkmal, sondern zunehmend als bloße Designvariante aufgefasst, so dass der Nutzen solcher Sicherheitsmerkmale als Fälschungsschutz abnimmt. Des Weiteren lassen sich die dadurch erzeugten Bildeindrücke nur unter bevorzugten Betrachtungsrichtungen und unter bestimmten Lichtverhältnissen wahrnehmen. Insbesondere bei schlechten Lichtverhältnissen ist die Erkennbarkeit der holographisch erzeugten Motive stark eingeschränkt.

Es ist weiterhin bekannt, Linsensysteme als Sicherheitsmerkmale einzusetzen. So ist beispielsweise in der EP 0 238 043 A2 ein Sicherheitsfaden aus einem transparenten Material beschrieben, auf dessen Oberfläche ein Raster aus mehreren parallel laufenden Zylinderlinsen eingeprägt ist. Die Dicke des Sicherheitsfadens ist dabei so gewählt, dass sie in etwa der Fokuslänge der Zylinderlinsen entspricht. Auf der gegenüberliegenden Oberfläche ist ein Druckbild registergenau aufgebracht, wobei das Druckbild unter Berücksichtigung der optischen Eigenschaften der Zylinderlinsen gestaltet ist. Aufgrund der fokussierenden Wirkung der Zylinderlinsen und der Lage des Druckbilds in der Fokusebene sind je nach Betrachtungswinkel unterschiedliche Teilbereiche des Druckbilds sichtbar. Durch entsprechende Gestaltung des Druckbilds können damit Informationen eingebracht werden, die jedoch lediglich unter bestimmten Blickwinkeln sichtbar sind. Durch entsprechende Ausgestaltung des Druckbilds können zwar auch "bewegte" Bilder erzeugt werden. Das Motiv bewegt sich bei Drehung des Dokuments um eine zu den Zylinderlinsen parallel laufende Achse allerdings nur annähernd kontinuierlich von einem Ort auf dem Sicherheitsfaden zu einem anderen Ort.

Davon ausgehend liegt der Erfindung die Aufgabe zugrunde, ein gattungsgemäßes Sicherheitselement mit hoher Fälschungssicherheit anzugeben, das die Nachteile des Standes der Technik vermeidet.

Diese Aufgabe wird durch das Sicherheitselement mit den Merkmalen des Hauptanspruchs gelöst. Ein Herstellungsverfahren für das Sicherheitselement, ein Sicherheitspapier sowie einen Wertgegenstand mit einem solchen Sicherheitselement sind in den nebengeordneten Ansprüchen angegeben. Weiterbildungen der Erfindung sind Gegenstand der Unteransprüche.
Vergrößerung zu sehen sind.

Ein solcher Vergrößerungseffekt wird auch als Moire-Vergrößerung bezeichnet. Die prinzipielle Funktionsweise von Moire-Vergrößerungsanordnungen ist in dem Artikel "The moiré magnifier", M.C. Hutley, R. Hunt, R.F. Stevens and P. Savander, Pure Appl. Opt. 3 (1994), pp. 133-142, beschrieben. Kurz gesagt, bezeichnet Moiré-Vergrößerung danach ein Phänomen, das bei der Betrachtung eines Rasters aus identischen Bildobjekten durch ein Linsenraster mit annähernd demselben Rastermaß auftritt. Wie bei jedem Paar ähnlicher Raster ergibt sich dabei ein Moiremuster, wobei in diesem Fall jeder der Moiréstreifen in Gestalt eines vergrößerten und gedrehten Bildes der wiederholten Elemente des Bildrasters erscheint.

Neben dem eigentlichen Vergrößerungseffekt kann das erfindungsgemäße Sicherheitselement eine charakteristische Tiefe bzw. ein dreidimensionales Erscheinungsbild sowie Bewegungseffekte zeigen, die weiter unten im Detail erläutert sind. Das zweite Echtheitsmerkmal ist maschinell und/oder visuell prüfbar und wird durch die erste Anordnung des ersten Echtheitsmerkmals nicht beeinflusst.

Die mit dem erfindungsgemäßen Sicherheitselement erzeugten Bilder können in einem weiten Bereich von Betrachtungswinkeln und unter im Wesentlichen allen üblichen Lichtverhältnissen deutlich wahrgenommen werden und stellen zudem ein optisch sehr ansprechendes Sicherheitselement bereit. Durch die sehr einprägsamen, neuartigen optischen Effekte wird das Augenmerk des Betrachters noch stärker auf das Sicherheitselement gezogen.

Um den Vergrößerungseffekt, die charakteristische Tiefe bzw. das dreidimensionale Erscheinungsbild sowie die Bewegungseffekte der Erfindung zu erzielen. sind die erste und zweite Anordnung so ausgestaltet, dass die Ortsfrequenzen des ersten und zweiten Rasters geringfügig unterschiedlich und die beiden Raster zueinander im Wesentlichen gleich orientiert sind. Dies kann insbesondere dadurch erreicht werden, dass das erste Raster und das zweite Raster der ersten bzw. zweiten Anordnung eine geringfügig unterschiedliche Rasterweite aufweisen. Die Rasterweite der beiden Raster liegt dabei zweckmäßig in der gleichen Größenordnung vor. Alternativ können das erste und zweite Raster eine im Wesentlichen identische Rasterweite aufweisen, wobei die Raster dann gegeneinander geringfügig gedreht angeordnet sind.

Gemäß einer alternativen Ausgestaltung können die erste und zweite Anordnung auch so ausgestaltet sein, dass das erste Raster und das zweite Raster eine im Wesentlichen identische Rasterweite aufweisen. Dadurch lassen sich Wechselbildeffekte erzielen, die weiter unten im Detail erläutert sind.

Die fokussierenden Elemente der ersten Anordnung bzw. die mikroskopischen Strukturen der zweiten Anordnung sind vorzugsweise in einem Raster mit festen geometrischen Beziehungen und Beabstandungen zueinander angeordnet. Insbesondere die fokussierenden Elemente der ersten Anordnung weisen dabei eine möglichst hohe Flächendeckung auf.

In einer bevorzugten Ausgestaltung liegt die Rasterweite des ersten und zweiten Rasters zwischen ungefähr 3 µm und ungefähr 50 µm, vorzugsweise zwischen ungefähr 5 µm und ungefähr 35 µm, besonders bevorzugt zwischen ungefähr 10 µm und ungefähr 20 µm. Die vorstehenden Abmessungen gewährleisten unter anderem, dass sich ein Sicherheitselement mit Abmessungen herstellen lässt, mit denen es insbesondere für die Verwendung in einem Sicherheitspapier, Wertdokument oder dergleichen geeignet ist. Ein solches Sicherheitselement weist vorzugsweise eine Gesamtdicke von weniger als 50 µm auf.

Zur Erzielung zusätzlicher Effekte kann die erste Anordnung in einer Variante der Erfindung auch derart ausgestaltet sein, dass sie eine Kombination von fokussierenden Elementen unterschiedlicher Größe und Rasterweite umfasst.

Um eine automatische Echtheitsprüfung und gegebenenfalls eine weitergehende sensorische Erfassung und Bearbeitung der mit dem Sicherheitselement ausgestatteten Wertgegenstände zu ermöglichen, umfasst das zweite Echtheitsmerkmal vorzugsweise eine maschinenlesbare Schicht. Die maschinenlesbare Schicht enthält mit Vorteil maschinenlesbare Merkmalstoffe, insbesondere reflektierende, magnetische, elektrisch leitfähige, polarisierende, phasenschiebende, phosphoreszierende, fluoreszierende oder sonstige lumineszierende Stoffe.

Gemäß einer bevorzugten Variante kann die maschinenlesbare Schicht durch eine opake, gerasterte oder eine sehr dünne, semitransparente Metallschicht gebildet sein.

In einer bevorzugten Variante können gezielt Aussparungen in die Metallschicht eingebracht sein. Dabei kann es sich beispielsweise um ein beliebiges Muster, eine Codierung oder um Textinformatiönen handeln. Die Aussparungen werden vorzugsweise mittels eines in der WO 99/13157 A1 beschriebenen Waschverfahrens oder eines der zahlreichen, in derselben Druckschrift genannten Demetallisierungsverfahren hergestellt. Beim Waschverfahren wird der zu entfernende Teilbereich der Metallschicht mit einer porösen, löslichen Druckfarbe bedruckt, die in einem späteren Verfahrensschritt mit der in diesem Teilbereich erzeugten Metallschicht unter Verwendung eines Lösungsmittels wieder entfernt wird. Das Waschverfahren bietet den Vorteil, dass die Aussparungen mit besonderer Konturenschärfe erzeugbar sind.

Grundsätzlich kommen aber auch andere Verfahren zur Entfernung von Teilbereichen der Metallschicht infrage. So lassen sich Aussparungen in der Metallschicht unter Verwendung einer ätzenden Druckfarbe erzeugen, mit deren Hilfe ein Druckbild auf die Metallschicht aufgedruckt wird. Alternativ kann auf die Metallschicht mit Ausnahme der später zu entfernenden Bereiche eine Schutzschicht aufgedruckt werden und die Metallschicht dann in den ungeschützten Bereichen entfernt, z. B. weggeätzt, werden. Bei einem weiteren bevorzugten Verfahren werden Aussparungen dadurch erzeugt, dass die entsprechenden Bereiche unmittelbar vor der Vakuumaufdampfung der Metallschicht mit einem flüchtigen Öl bedruckt werden. An den ölbedruckten Stellen scheidet sich dann im Vakuumaufdampfungsverfahren kein Metall ab. Weitere bevorzugte Möglichkeiten zur Erzeugung von Aussparungen in der Metallschicht bieten die Laserabtragung oder das Verfahren der Elektroerosion.

Zur Erzeugung der fokussierenden und insbesondere linsenförmigen Elemente der ersten Anordnung bzw. der geprägten Mikrostrukturen der zweiten Anordnung kommen unterschiedliche Verfahren zur Anwendung. Insbesondere können mithilfe klassischer Techniken der Halbleitertechnologie (Photolithographie, Elektronenstrahllithographie, Laserlithographie, Laserablation) geeignete Strukturen in Resistmaterialien belichtet, eventuell veredelt, galvanisch abgeformt und zur Fertigung von Prägewerkzeugen für die Folienprägung verwendet werden. Besonders geeignet zur Herstellung großer Flächen sind die bekannten Verfahren zur Prägung in thermoplastische Folien oder in mit strahlungshärtenden Lacken beschichtete Folien. Alternativ sind auch Techniken bekannt, Mikrolinsensysteme durch Ink-Jet-Druckverfahren oder durch Selbstorganisationsprozesse von Mikropartikeln auf Oberflächen aufzubringen.

Die erste und die zweite Anordnung sind mit Vorteil derart angeordnet, dass die als Erhebungen ausgebildeten fokussierenden Elemente der ersten Anordnung und die geprägten Mikrostrukturen der zweiten Anordnung in die gleiche Richtung zeigen. Alternativ können die erste und die zweite Anordnung derart angeordnet sein, dass die Erhebungen der fokussierenden Elemente der ersten Anordnung und die geprägten Mikrostrukturen der zweiten Anordnung in unterschiedliche Richtungen zeigen.

Die geprägten Mikrostrukturen umfassen mit Vorteil Elemente, die in Form von sphärischen oder asphärischen Kalotten, Kegeln, Dreieckspyramiden, Trapezpyramiden, Kegelstümpfen, Pyramidenstümpfen oder dergleichen vorliegen, und/oder eine Basisfläche in Form von Zeichen, Mustern oder Codierungen aufweisen. Vorzugsweise besitzen die fokussierenden Elemente der ersten Anordnung und gegebenenfalls die geprägten Mikrostrukturen der zweiten Anordnung kreisförmige oder elliptische Basisflächen.

In einer Weiterbildung der Erfindung sind die geprägten Mikrostrukturen in einen eingefärbten Prägelack, vorzugsweise einen eingefärbten opaken oder einen lasierend eingefärbten Prägelack, eingeprägt. Der eingefärbte Prägelack ist dabei mit Vorteil ein Farbpigmente enthaltender strahlungshärtender Lack. Die geprägten Mikrostrukturen können auch auf einem eingefärbten oder mit einer zusätzlichen Farbschicht versehenen Trägersubstrat angeordnet sein. Gemäß einer bevorzugten Variante können die geprägten Mikrostrukturen auf der strukturierten Seite der zweiten Anordnung ferner mit einer opaken Beschichtung, vorzugsweise einer Metallschicht oder einer opaken Farbschicht, versehen sein.

In der Erfindung sind das erste und zweite Echtheitsmerkmal derart zueinander angeordnet, dass ein visuell erkennbarer 2D-/ 3D-Effekt entsteht. Die mikroskopischen Strukturen umfassen dabei geprägte Mikrostrukturen, die mit einer das zweite Echtheitsmerkmal bereitstellenden reflektierenden Metallschicht beschichtet sind. Zur Erhöhung des Fälschungsschutzes sind in der Reflexionsschicht Aussparungen in Form von Zeichen, Mustern oder Codierungen vorzusehen oder die Reflexionsschicht in Form von Zeichen, Mustern oder Codierungen auszubilden.

Die fokussierenden Elemente der ersten Anordnung und/oder mikroskopischen Strukturen der zweiten Anordnung sind bei dem erfindungsgemäßen Sicherheitselement mit Vorteil auf einem Trägersubstrat angeordnet. Um die erste und zweite Anordnung zueinander hinsichtlich eines geeigneten, auf die Brennweite der ersten Anordnung abgestimmten Abstands auszurichten, kann eine Abstandsschicht und/oder Klebstoffschicht vorgesehen sein. Eine solche Abstandsschicht kann im Falle von geprägten fokussierenden Elementen durch das Trägersubstrat gebildet werden.

Die erfindungsgemäßen linsenförmigen Elemente können als transmissive, refraktive oder diffraktive Linsen oder als eine Mischform daraus vorliegen.

Alternativ können die linsenförmigen Elemente durch Polymer- oder Glaskugeln gebildet werden, die bis zu einer gewissen Höhe in Lack eingebettet sind.

Bei Verwendung von refraktiven Linsen sollte zwischen dem Brechungsindex der Linsen und dem der angrenzenden Umgebung ein genügend großer Unterschied bestehen, um eine Linsenwirkung zu erzielen. Da Linsen typischerweise aus Lacken mit einem Brechungsindex von 1,2 bis 1,5 hergestellt werden, ist die Wirkung der Linsen stark, wenn die an die Linsen angrenzende Schicht durch Luft mit einem Brechungsindex von 1 bereitgestellt wird. Freiliegende Linsen weisen allerdings den Nachteil auf, dass diese sich einerseits leicht abformen lassen und andererseits im Umlauf der mit dem Sicherheitselement versehenen Wertgegenstände durch Einwirkung von Schmutz, Chemikalien oder mechanischen Einflüssen leiden können.

Es ist daher oftmals wünschenswert, die Linsen einzubetten. Dazu können insbesondere hochbrechende Schutzschichten verwendet werden, welche Brechungsindizes aufweisen, die sich um wenigstens 0,3 von dem Brechungsindex der Linsen unterscheiden. Es bieten sich hierfür z.B. Lacke an, die mit Nanopartikeln aus Titanoxid gefüllt sind. Solche und ähnliche Systeme mit Brechungsindizes zwischen 1, 7 und 2 sind kommerziell erhältlich.

Bevorzugt ist das Sicherheitselement ein Sicherheitsfaden, ein Aufreißfaden, ein Sicherheitsband, ein Sicherheitsstreifen, ein Patch oder ein Etikett zum Aufbringen auf ein Sicherheitspapier, Wertdokument oder dergleichen. Beispielsweise kann das Sicherheitselement in einer bevorzugten Ausgestaltung transparente oder freitragende Bereiche (Löcher) überspannen, wobei seine auf beiden Seiten unterschiedlichen optischen Erscheinungsbilder von beiden Seiten sichtbar werden.

Die erfindungsgemäßen mikroskopischen Strukturen der zweiten Anordnung werden als geprägte Mikrostrukturen ausgebildet. Vorzugsweise erfolgt die Prägung der Mikrostrukturen in einen eingefärbten Prägelack, vorzugsweise einen eingefärbten opaken oder einen lasierend eingefärbten Prägelack. Dabei kann der eingefärbte Lack in einem ersten Schritt auf ein Trägersubstrat aufgetragen und in einem zweiten Schritt mit einem Prägewerkzeug derart geprägt werden, dass Bereiche unterschiedlicher Profilhöhe bzw. Profiltiefe entstehen, die dann die Mikrostrukturen bilden.

Ein Sicherheitspapier für die Herstellung von Sicherheitsdokumenten, wie Banknoten, Ausweiskarten oder dergleichen, ist bevorzugt mit einem Sicherheitselement der oben beschriebenen Art ausgestattet. Insbesondere kann das Sicherheitspapier ein Trägermaterial aus Papier und/oder Kunststoff umfassen.

Die Erfindung enthält auch einen Wertgegenstand, wie einen Markenartikel, ein Wertdokument oder dergleichen, der mit einem oben beschriebenen Sicherheitselement versehen ist. Der Wertgegenstand kann insbesondere ein Sicherheitspapier, ein Wertdokument oder eine Produktverpackung sein.

Wertgegenstände im Sinne der vorliegenden Erfindung sind insbesondere Banknoten, Aktien, Anleihen, Urkunden, Gutscheine, Schecks, hochwertige Eintrittskarten, aber auch andere fälschungsgefährdete Papiere, wie Pässe und sonstige Ausweisdokumente, sowie Produktsicherungselemente, wie Etiketten, Siegel, Verpackungen und dergleichen. Der Begriff "Wertgegenstand" schließt im Folgenden alle derartigen Gegenstände, Dokumente und Produktsicherungsmittel ein. Unter dem Begriff "Sicherheitspapier" wird die noch nicht umlauffähige Vorstufe zu einem Wertdokument verstanden, die neben dem Sicherheitselement weitere Echtheitsmerkmale, wie z.B. im Volumen vorgesehene Lumineszenzstoffe, aufweisen kann. Sicherheitspapier liegt üblicherweise in quasi endloser Form vor und wird zu einem späteren Zeitpunkt weiterverarbeitet.

Weitere Ausführungsbeispiele sowie Vorteile der Erfindung werden nachfolgend anhand der Figuren erläutert, bei deren Darstellung auf eine maßstabs- und proportionsgetreue Wiedergabe verzichtet wurde, um die Anschaulichkeit zu erhöhen.

Es zeigen:
- Fig.1: eine schematische Darstellung einer Banknote mit einem eingebetteten Sicherheitsfaden und einem aufgeklebten Sicherheitselement,
- Fig. 2: in (a) einen Querschnitt durch ein Sicherheitselement und in (b) eine Explosionsdarstellung einer ersten und zweiten Anordnung dieses Sicherheitselements,
- Fig. 3: ein Sicherheitselement nach einem weiteren Ausführungsbeispiel der Erfindung im Querschnitt,
- Fig. 4: eine Aufsicht auf eine zweite Anordnung des Sicherheitselements von Fig. 3.
- Fig. 5: ein Sicherheitselement nach einem weiteren Ausführungsbeispiel der Erfindung im Querschnitt,
- Fig. 6: ein Sicherheitselement nach einem noch weiteren Ausführungsbeispiel der Erfindung im Querschnitt,
- Fig. 7: eine Explosionsdarstellung einer ersten Anordnung und einer zweiten, als Mikrotextraster ausgestalteten Anordnung eines erfindungsgemäßen Sicherheitselements,
- Fig. 8: eine Aufsicht auf die zweite Anordnung des Sicherheitselements von Fig. 7,
- Fig. 9: in (a) und (b) Schritte zur Herstellung mikroskopischer Strukturren für die zweite Anordnung eines Sicherheitselements nach einem weiteren Ausführungsbeispiel der Erfindung,
- Fig. 10: ein Sicherheitselement mit nach dem Ausführungsbeispiel der Fig. 9 herstellbaren mikroskopischen Strukturen im Querschnitt.
- Fig.11: ein Sicherheitselement nach einem weiteren Ausführungsbeispiel der Erfindung im Querschnitt,

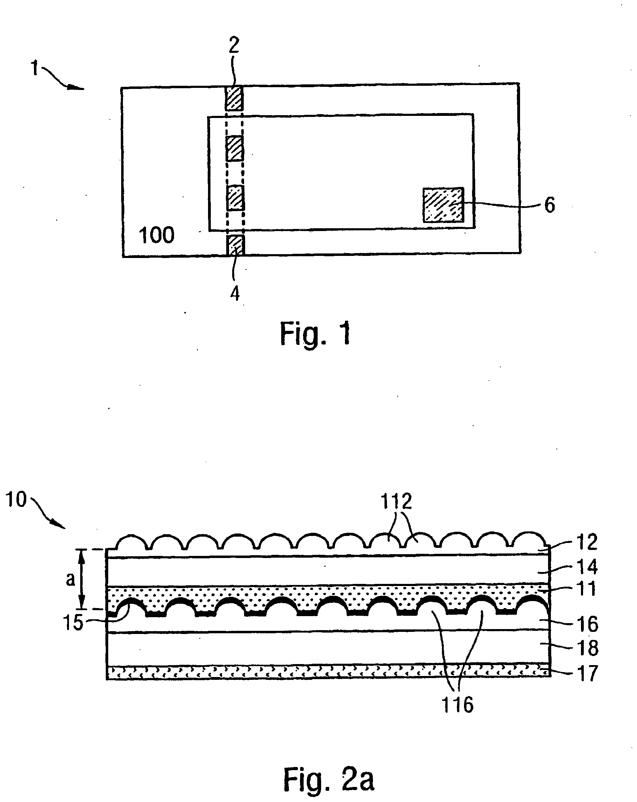

Die Erfindung wird nun am Beispiel einer Banknote näher erläutert. Fig. 1 zeigt dazu eine schematische Darstellung einer Banknote 1 mit zwei Sicherheitselementen 2 und 6, die jeweils nach einem Ausführungsbeispiel der Erfindung gebildet sind. Das erste Sicherheitselement stellt einen Sicherheitsfaden 2 dar, der in bestimmten Fensterbereichen 4 an der Oberfläche der Banknote 1 hervortritt, während er in den dazwischen liegenden Bereichen im Inneren der Banknote 1 eingebettet ist. Das zweite Sicherheitselement ist durch ein aufgeklebtes Sicherheitselement 6 beliebiger Form gebildet.

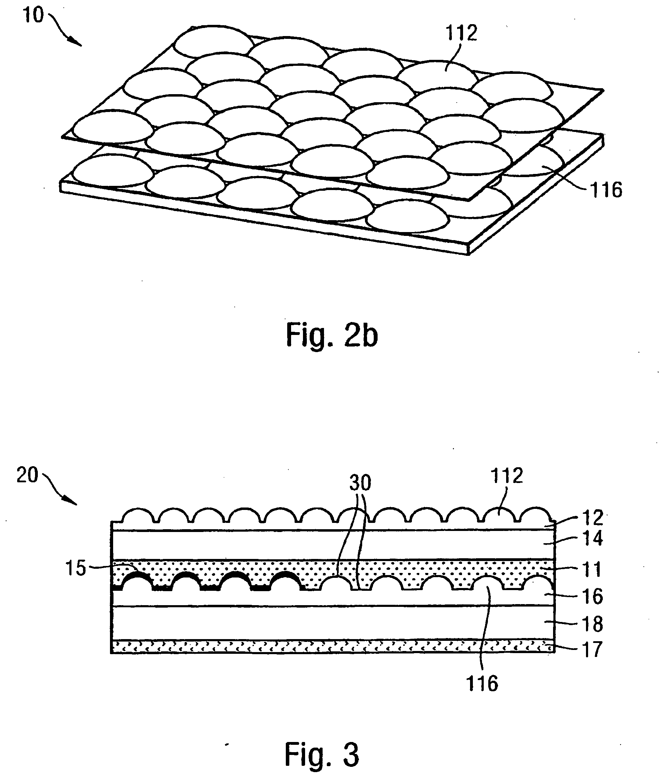

Zur Erläuterung des erfindungsgemäßen Prinzips zeigt Fig. 2 schematisch den Schichtaufbau eines Sicherheitselements 10 im Querschnitt (Fig. 2 (a)) sowie zur besseren Übersicht in Explosionsdarstellung (Fig. 2 (b)). Das Sicherheitselement 10 kann beispielsweise in Form eines Sicherheitsfadens vorliegen. Es ist allerdings im Rahmen der Erfindung ebenso möglich, dem Sicherheitselement jede beliebige andere Umrissform zu geben.

Auf einem Trägersubstrat 14, beispielsweise einer PET-Folie, ist in einen strahlungshärtenden Lack, z. B. einen UV-Lack, eine Anordnung fokussierender Elemente, im Ausführungsbeispiel eine Linsenanordnung 12, eingeprägt. Die Linsenanordnung 12 weist eine Vielzahl von sphärischen linsenförmigen Elementen bzw. Mikrolinsen 112 auf, die in einem Raster mit fester Geometrie, z.B. einem hexagonalen Raster, angeordnet sind. Die Mikrolinsen liegen in Form einer konvexen Erhebung vor und wirken als konvexe Linsen, wenn das Sicherheitselement aus der Richtung der Linsenanordnung 12 betrachtet wird. Im Beispiel weisen die Mikrolinsen der Linsenanordnung 12 eine Linsenapertur von 10 µm, einen Linsenradius von ungefähr 12 µm sowie einen Linsenabstand von 11 µm auf.

Die Linsenanordnung 12 ist zusammen mit dem Trägersubstrat 14 über eine Klebstoffschicht 11 mit einer Anordnung von mikroskopischen Strukturen bzw. einer Mikrostrukturanordnung 16 verbunden, die auf einem Trägersubstrat 18 vorliegt und zusammen mit der Linsenanordnung 12 ein erstes Echtheitsmerkmal bildet. Auch die Mikrostrukturanordnung 16 weist im Beispiel sphärische linsenförmige Elemente bzw. Mikrolinsen 116 auf, die in der gleichen geometrischen Anordnung wie die Linsenanordnung 12, d.h. in einem hexagonalen Raster, angeordnet sind. Im Beispiel weisen die Mikrolinsen 116 auch die gleichen geometrischen Abmessungen auf wie die Mikrolinsen 112. Der Abstand a der ersten Linsenanordnung 12 von der Mikrostrukturanordung bzw. zweiten Linsenanordnung 16 liegt vorzugsweise in der Größenordnung der Brennweite der Mikrolinsen 112 der ersten Linsenanordnung. Selbstverständlich können die Mikrolinsen 112 und 116 statt in einem hexagonalen Raster alternativ auch in polygonalen Rastern, wie z.B. rechteckigen Rastern, angeordnet sein.

Wie in Fig. 2 (a) angedeutet ist, unterscheidet sich der zwischen den einzelnen Mikrolinsen 112 in der Schnittebene vorliegende Abstand von dem zwischen den Mikrolinsen 116 vorliegenden Abstand. Ein solcher geringfügiger Unterschied in den Ortsfrequenzen der Mikrolinsen 112,116 der ersten und zweiten Linsenanordnung 12 bzw. 16 dient, wie nachstehend im Detail erläutert, zur Erzeugung des gewünschten Moiré-Vergrößerungseffekts. Es wird an dieser Stelle nochmals darauf hingewiesen, dass die Darstellung in den Figuren aus Gründen der besseren Anschaulichkeit keine maßstabs- und proportionsgetreue Wiedergabe des erfindungsgemäßen Sicherheitselements zeigt.

Der Unterschied in den Ortsfrequenzen kann beispielsweise dadurch erzeugt werden, dass die Raster der ersten und zweiten Linsenanordnung 12, 16 eine im Wesentlichen identische Rasterweite aufweisen, gegeneinander jedoch geringfügig gedreht bzw. rotiert angeordnet sind. In diesem Fall stimmt der tatsächliche Linsenabstand der Mikrolinsen 116 der zweiten Linsenanordnung 16 mit dem der Mikrolinsen 112 der ersten Linsenanordnung 12 überein. Alternativ kann dieser Effekt auch dadurch erzeugt werden, dass die erste und die zweite Linsenanordnung 12, 16 einen geringfügig abweichenden Linsenabstand aufweisen. Entscheidend ist lediglich, dass sich die Ortsfrequenzen der beiden Raster geringfügig unterscheiden. Darüber hinaus ist zu berücksichtigen, dass die Vergrößerungswirkung zunimmt, je kleiner der Unterschied in den Ortsfrequenzen ist. Die Mikrolinsen 116 der zweiten Linsenanordnung 16 werden also abhängig von ihrer Ortsfrequenz mehr oder weniger durch die Mikrolinsen 112 vergrößert. Je nach erwünschter Vergrößerungswirkung kann somit ein geeigneter Unterschied in den Ortsfrequenzen der Mikrolinsen 212, 116 vorgesehen werden.

Die Mikrolinsen 116 der Linsenanordnung 16 sind mit einer durchgehenden Metallschicht 15 versehen, die beispielsweise aufgedampft ist. Betrachtet man das Sicherheitselement 10 aus Richtung der Seite der ersten Linsenanordnung 12, wirken die Mikrolinsen 116 somit nicht als Linsen im eigentlichen Sinne, sondern als reflektierende Elemente bzw. Mikrostrukturen, die abhängig von dem Ort und Winkel des auftreffenden Lichts unterschiedlich stark reflektieren. Durch Aufbringen der Metallschicht 15 erhält man zudem ein zweites Echtheitsmerkmal in Form einer leitfähigen Schicht, wobei das Echtheitsmerkmal maschinell überprüft werden kann.

Die Metallschicht 15 kann auch als semitransparente Metallschicht ausgebildet sein. Eine solche semitransparente Metallschicht kann beispielsweise durch eine sehr dünne Metallschicht oder eine gerasterte Metallschicht hergestellt werden.

Zum Übertragen des Sicherheitselements 10 auf ein Sicherheitspapier bzw. zur Verbesserung der Haftung eines als Sicherheitsfaden ausgestalteten Sicherheitselements kann ferner ein aktivierbarer Kleber 17 auf das Trägersubstrat 18 der zweiten Linsenanordnung aufgebracht sein.

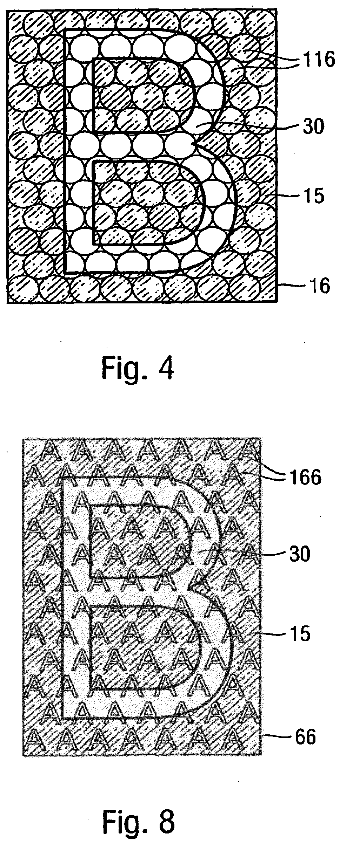

Der Aufbau eines erfindungsgemäßen Sicherheitselements in einer Ausgestaltung wird nun mit Bezug auf die Figuren 3 und 4 näher erläutert. Fig. 3 stellt dabei einen Querschnitt durch das Sicherheitselement 20 dar, Fig. 4 zeigt eine Aufsicht auf eine zweite Linsenanordnung 16 des Sicherheitselements 20.

Das in den Figuren 3 und 4 dargestellte erfindungsgemäße Sicherheitselement 20 entspricht im Aufbau im Wesentlichen dem Sicherheitselement 10 aus Fig. 2. Allerdings ist hier zur Erhöhung des Fälschungsschutzes als zweites Echtheitsmerkmal noch zusätzlich eine Aussparung 30 in der Metallschicht 15 vorgesehen, welche in dem dargestellten Ausführungsbeispiel eine konkrete Information im Klartext zeigt, nämlich den Buchstaben "B". Es sind vielfältige Verfahren bekannt, um derartige Aussparungen zu erzeugen. Bevorzugt wird jedoch die Erzeugung der Aussparung im Waschverfahren, wie in der Druckschrift WO 99/13157 A1 beschrieben. Die Aussparungen 30 sind im Durchlicht besonders gut visuell erkennbar, im Auflicht ist im Wesentlichen das durch die Linsenanordnung 12 erzeugte Bewegungsbild mit Moiré-Vergrößerungseffekt erkennbar.

Das erfindungsgemäße Sicherheitselement 20 zeigt bei Betrachtung ein extrem vergrößertes, dreidimensional erscheinendes Bild der Mikrolinsen 116 der zweiten Linsenanordnung 16, das eine charakteristische Tiefe sowie Bewegungseffekte aufweist. Die Mikrolinsen 116 erscheinen hierbei als vergrößerte "Hügel". Durch die Vergrößerungswirkung können die reflektierenden Mikrolinsen 116 der zweiten Linsenanordnung 16, die tatsächlich in Dimensionen vorliegen, die unterhalb der Auflösungsgrenze des menschlichen Auges liegen, nun visuell vom Betrachter wahrgenommen werden. Die Dreidimensionalität des Bildes wird durch die geprägten und daher als solche bereits dreidimensionalen Mikrolinsen 116 noch verstärkt. Die Bewegungseffekte zeichnen sich dadurch aus, dass das vergrößerte Bild über, unter oder in der Oberfläche des Sicherheitselements zu schweben und sich in einer parallaktischen oder auch ortho-parallaktischen Art und Weise zu bewegen scheint. Die so erzeugten dreidimensionalen Bilder weisen den Vorteil auf, dass sie unter im Wesentlichen allen üblichen Lichtverhältnissen wahrgenommen werden können. Darüber hinaus stellen sie sehr einprägsame optische Effekte bereit.

Die beschriebene Vergrößerungswirkung der Mikrolinsen 112 der ersten Linsenanordnung 12 betrifft nur die in einem Raster angeordneten Mikrolinsen 116 der zweiten Linsenanordnung 16, nicht jedoch die durch die Aussparungen 30 in der Metallschicht 15 erzeugte Information. Wie sich Fig. 4 entnehmen lässt, kann sich eine solche Information über eine Vielzahl von Mikrolinsen erstrecken. Eine Wiederholung der Information in einem regelmäßigen Raster ist im vorliegenden Beispiel nicht gegeben, aber in der Praxis üblich. Bei Betrachtung in Reflexion, insbesondere dann, wenn das Sicherheitselement 20 auf einem dunklen Untergrund angeordnet ist, erscheint dem Betrachter der durch die Aussparungen 30 erzeugte Buchstabe daher als zweidimensionales Bild in Originalgröße, wobei das Bild auf dem dreidimensional erscheinenden vergrößerten Bild der Linsenanordnung 16 zu schweben scheint.

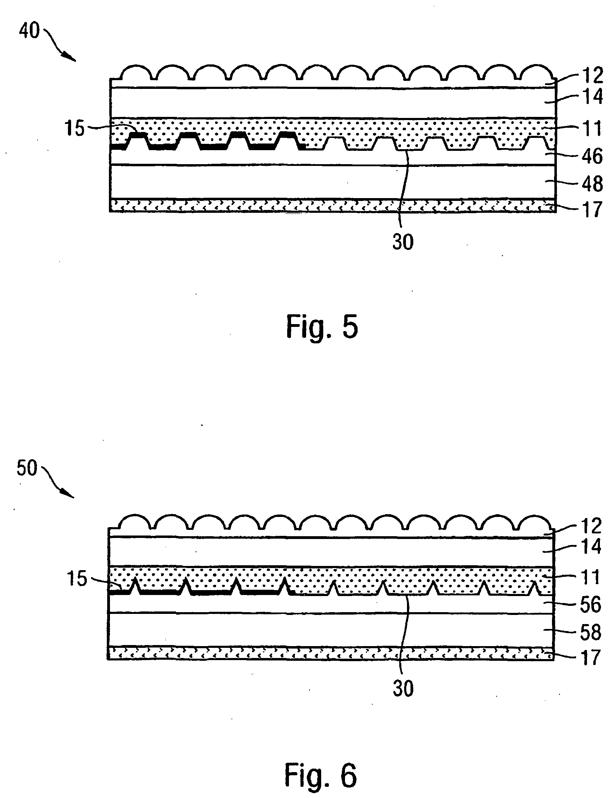

Die Figuren 5 und 6 zeigen weitere Ausführungsbeispiele der Erfindung, bei denen die Ausgestaltung der Mikrostrukturanordnung variiert wurde. Im Rahmen der Erfindung sind außerdem Variationen der Mikrolinsen 112 bzw. der Linsenanordnung 12 hinsichtlich Linsenform, Raster, Linsenapertur, Linsenradius und Linsenabstand denkbar. Insbesondere kann die Linsenanordnung 12 als eine Kombination von Mikrolinsen vorliegen, die sich in wenigstens einem dieser Parameter unterscheiden.

Das Ausführungsbeispiel der Fig. 5 zeigt ein Sicherheitselement 40 mit einer auf einem Trägersubstrat 14 angeordneten Linsenanordnung 12, die eine Vielzahl von Mikrolinsen 112 aufweist. Die Mikrolinsen 112 weisen im Beispiel eine Linsenapertur von 20 µm, einen Linsenradius von ungefähr 12 µm sowie einen Linsenabstand von 21 µm auf.

Eine Mikrostrukturanordnung 46, die ebenfalls auf einem Trägersubstrat 48, beispielsweise einer PET-Folie, vorliegt, ist in einen strahlungshärtenden Lack eingeprägt. Die Mikrostrukturanordnung 46 weist eine Vielzahl von geprägten Elementen auf, die eine kreisförmige Basisfläche sowie einen trapezförmigen Querschnitt aufweisen. Die Elemente der Mikrostrukturanordnung 46 sind in der gleichen geometrischen Anordnung wie die Mikrolinsen 112 der Linsenanordnung 12, im Beispiel in einem hexagonalen Raster, angeordnet. Je nach gewünschter Vergrößerungswirkung kann der Unterschied in der Ortsfrequenz des jeweiligen Rasters der ersten Linsenanordnung 12 und Mikrostrukturanordnung 46 geeignet gewählt werden. Dies kann beispielsweise dadurch geschehen, dass die Elemente der Mikrostrukturanordnung 46 einen im Vergleich zum Abstand der Mikrolinsen 112 geringfügig größeren Abstand untereinander aufweisen oder bei einem im Wesentlichen identischen Abstand geringfügig gegeneinander gedreht angeordnet sind. Bei Betrachtung aus Richtung der Linsenanordnung 12 zeigt sich ein dreidimensionales, vergrößertes Bild der Elemente der Mikrostrukturanordnung 46. Dieses weist eine charakteristische Tiefe sowie Bewegungseffekte auf und zeigt die Elemente der Mikrostrukturanordnung 46 dabei als vergrößerte "Hügel" bzw. Kegelstümpfe.

Auf die Mikrostrukturanordnung 46 ist ferner als zweites Echtheitsmerkmal eine Metallschicht 15 aufgebracht, z.B. aufgedampft, in der zur Erhöhung des Fälschungsschutzes Aussparungen 30 vorgesehen sein können, die eine konkrete, dem Betrachter zweidimensional erscheinende Information zeigen.

Das in Fig. 6 dargestellte erfindungsgemäße Sicherheitselement 50 entspricht im Aufbau im Wesentlichen dem Sicherheitselements 40 aus Fig. 5. Die auf einem Trägersubstrat 58 angeordnete Mikrostrukturanordnung 56 umfasst hier allerdings eine Vielzahl von in einem Raster angeordneten, geprägten Elementen mit kreisförmiger Basisfläche, die einen dreieckigen Querschnitt aufweisen. Dem Betrachter zeigt sich daher ein dreidimensionales vergrößertes Bild der als "Kegel" wahrnehmbaren Elemente der Mikrostrukturanord nung 56. Die Dreidimensionalität des Bildes wird durch die als solche bereits dreidimensionalen Elemente noch verstärkt.

Mittels klassischer Verfahren der Halbleitertechnologie lassen sich auch Mikrostrukturen mit beliebigen Formen und Konturen herstellen. So können beispielsweise geprägte Mikrostrukturen in Form von Buchstaben oder Ziffern vorliegen. Wird ein solches System mit Licht beleuchtet, entsteht ein Helligkeitsmuster des Schriftzugs. Derartig gestaltete Mikrostrukturen sind daher ebenfalls für das erfindungsgemäße Sicherheitselement geeignet.

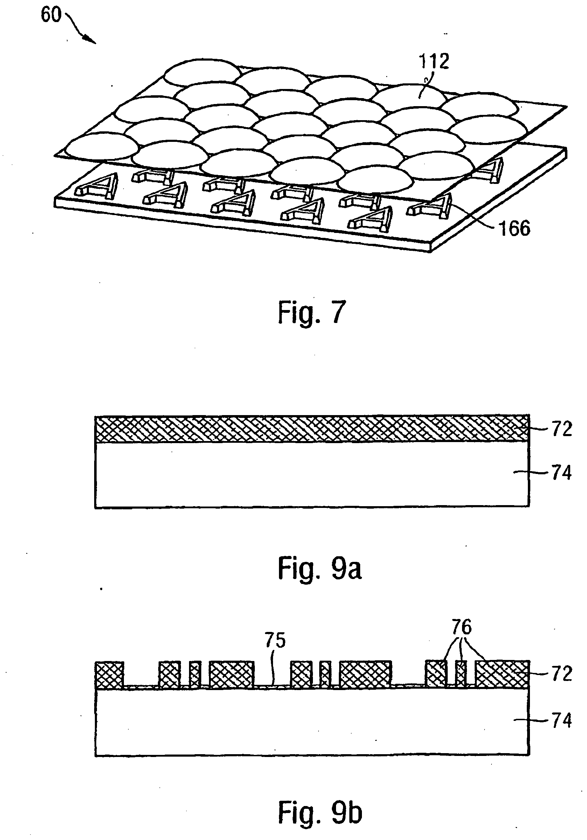

Der Aufbau eines derartigen erfindungsgemäßen Sicherheitselements, bei dem eine Mikrostrukturanordnung als geprägtes Mikrotextraster ausgebildet ist, wird nun mit Bezug auf die Figuren 7 und 8 näher erläutert. Fig. 7 zeigt dabei zur besseren Übersicht eine Explosionsdarstellung des Sicherheitselements 60, Fig. 8 zeigt eine Aufsicht auf einen Teilbereich der Mikrostrukturanordnung 66 des Sicherheitselements 60.

Das Sicherheitselement 60 unterscheidet sich von den vorstehend beschriebenen, erfindungsgemäßen Sicherheitselementen dadurch, dass hier anstelle einer Anordnung von Elementen mit kreisförmiger Basisfläche eine Anordnung 66 von in einem Raster vorliegenden geprägten Mikrotextstrukturen 166 verwendet wird. Die Mikrotextstrukturen 166 zeigen in dem dargestellten Ausführungsbeispiel eine konkrete Information, nämlich die Buchstabenfolge "A", die in Dimensionen vorliegt, die in etwa denen der Mikrolinsen 112 entsprechen und somit unterhalb der Auflösungsgrenze des menschlichen Auges liegen. Die Mikrotextstrukturen 166 der Anordnung 66 sind ferner in der gleichen geometrischen Anordnung wie die Linsenanordnung 12, im Beispiel in einem hexagonalen Raster, angeordnet. In der auf die Anordnung 66 aufgebrachten Metallschicht 15, die das zweite Echtheitsmerkmal bereitstellt, ist außerdem eine Aussparung 30 vorgesehen, die in dem dargestellten Ausführungsbeispiel eine konkrete Information in Form des Buchstabens "B" zeigt

Auch in diesem Beispiel dient ein geringfügiger Unterschied in den Ortsfrequenzen der Mikrolinsen 112 und der Mikrostrukturen 166, der durch die oben beschriebenen Maßnahmen erreicht werden kann, zur Erzeugung des gewünschten Moire-Vergrößerungseffekts des ersten Echtheitsmerkmals. Das erfindungsgemäße Sicherheitselement 60 zeigt entsprechend bei Betrachtung ein extrem vergrößertes dreidimensionales Bild der Mikrotextstrukturen 166, das eine charakteristische Tiefe sowie Bewegungseffekte aufweist und die Mikrotextstrukturen 166 als vergrößerte Buchstabenfolge "A" zeigt. Diesem Bild als zweidimensionales Bild überlagert kann der Betrachter die als Aussparung 30 vorliegende konkrete Information, nämlich den Buchstaben "B", in Originalgröße erkennen.

Die dreidimensionale Wirkung der beschriebenen, geprägten mikroskopischen Strukturen entsteht durch die Anordnung der mikroskopischen Strukturen in einem Raster, und zwar unabhängig davon, ob die mikroskopischen Strukturen als solche bereits dreidimensional sind. Die durch die Aussparung 30 in der Metallschicht 15 erzeugte Information, die sich über eine Vielzahl der Mikrolinsen 112 erstreckt, liegt dagegen nicht in einem regelmäßigen Raster vor. Sie erscheint dem Betrachter daher lediglich als zwei dimensionales Bild in Originalgröße, das auf dem dreidimensionalen, vergrößerten Bild der geprägten mikroskopischen Strukturen angeordnet zu sein scheint.

Idealerweise weisen Sicherheitselemente eine Gesamtdicke von weniger als 50 µm auf. Dadurch bedingt werden Mikrolinsen und damit mikroskopische Strukturen mit sehr hoher Auflösung notwendig. Die Herstellung von mikroskopischen Strukturen in einer Größenordnung, wie sie für Sicherheitsanwendungen und insbesondere für die Verwendung damit ausgestatteter Sicherheitselemente in einem Sicherheitspapier, Wertdokument oder dergleichen geeignet ist, ist allerdings mit gewissen Schwierigkeiten behaftet.

Werden für eine Linsenanordnung z. B. Mikrolinsen mit einem Linsendurchmesser von etwa 30 µm verwendet, müssen die mikroskopischen Strukturen der Mikrostrukturanordnung ebenso in der Größenordnung von etwa 30 µm liegen. Sollen dabei nicht lediglich punktförmige Mikrostrukturen, sondern komplexere Mikrostrukturen, wie Buchstaben, Ziffern, Zeichen wie z. B. "€"- oder "$"-Zeichen, Logos oder gar Bilder, verwendet werden, muss die Auflösung der mikroskopischen Strukturen bei wenigen Mikrometern oder sogar noch deutlich darunter liegen. Mikroskopische Strukturen dieser Größenordnung lassen sich mit klassischen Drucktechniken oftmals nicht ohne weiteres herstellen.

Im Folgenden werden daher einige Ausführungsbeispiele dargestellt, bei denen die mikroskopischen Strukturen auf andere Art und Weise hergestellt sind.

Mit Bezug auf Fig. 9 wird zunächst ein Verfahren zur Herstellung einer Mikrostrukturanordnung mit geprägten, farbigen Mikrostrukturen näher erläutert. Bei dem im Fig. 9 dargestellten Verfahren wird unter anderem ausgenutzt, dass sich mithilfe von Prägetechniken sehr kleine Strukturen erzeugen lassen. Im Ausführungsbeispiel werden diese Strukturen dabei nicht, wie üblich, mit einem farblosen Prägelack erzeugt und zur Erzielung eines optischen Effekts mit z.B. einer spiegelnden Metallschicht bedampft, sondern es wird ein deutlich eingefärbter, insbesondere opaker Prägelack 72 verwendet. Geeignete Prägelacke sind z. B. Farbpigmente enthaltende UV-Lacke.

Wie in Fig. 9 (a) gezeigt ist, wird der eingefärbte Prägelack 72 in einem ersten Schritt durch herkömmliche Drucktechniken auf ein transparentes Trägersubstrat 74, beispielsweise eine PET-Folie, in einer geeigneten Schichtdicke von in etwa 1 bis 30 µm, vorzugsweise etwa 1 bis 15 µm, vollflächig aufgetragen. Die Mikrostrukturierung des Prägelacks 72 erfolgt dann mittels bekannter Prägetechniken. Beispielsweise lassen sich mithilfe klassischer lithograpischer Techniken oder anderer Techniken aus der Halbleitertechnologie (Photolithographie, Elektronenstrahllithographie, Laserablation) ohne weiteres geeignete Prägewerkzeuge herstellen, die Mikrostrukturen im Bereich von wenigen Nanometern bis mehreren hundert Mikrometern aufweisen können. Die damit zu erreichende Auflösung ist deshalb der der klassischen Drucktechniken überlegen. Bei der Prägung wird die Prägelackschicht 72 zu dünnen, d.h. nahezu farblosen, Bereichen 75 und dickeren, Mikrostrukturen bildenden Bereichen 76 mit hoher Farbsättigung strukturiert, wodurch ein farbiges Mikrobild bzw. eine Mikrostrukturanordnung mit hoher Auflösung entsteht (Fig. 9 (b)). Die Profilhöhen bzw. -tiefen liegen dabei zwischen etwa 2 µm und 30 µm.

Alternativ ist es auch denkbar, ein eingefärbtes Trägersubstrat oder ein mit einer zusätzlichen Farbschicht versehenes Trägersubstrat mit einem weiß oder anders eingefärbten, opaken Prägelack zu beschichten. Auf diese Weise lassen sich (negative) Mikrostrukturen durch bereichsweises "Ausblenden" des darunter liegenden (farbigen) Trägersubstrats erzeugen.

Die mit dem vorstehenden Verfahren erzeugten geprägten Mikrostrukturen 76 sind in einem Raster angeordnet, das in Größenordnung und geometrischer Beziehung dem Raster einer nicht gezeigten Anordnung fokussierender Elemente entspricht, mit der die Mikrostrukturanordnung zur Ausbildung eines ersten Echtheitsmerkmals kombiniert werden kann.

Das Sicherheitselement kann weitere Echtheitsmerkmale in Form einer maschinenlesbaren Schicht aufweisen, die maschinenlesbare Merkmalsstoffe, beispielsweise magnetische, elektrisch leitfähige, phosphoreszierende oder fluoreszierende Stoffe, enthält. Auch die Prägelackschicht 72 als solche kann maschinenlesbare Merkmalsstoffe enthalten. Beispielsweise können dem Prägelack magnetische Pigmente zugesetzt sein.

In einem weiteren, hier nicht gezeigten Schritt können die mit dem vorstehenden Verfahren erhaltenen geprägten Mikrostrukturen 76 gegebenenfalls mittels elektromagnetischer Strahlung, z. B. ultravioletter Strahlung, gehärtet werden.

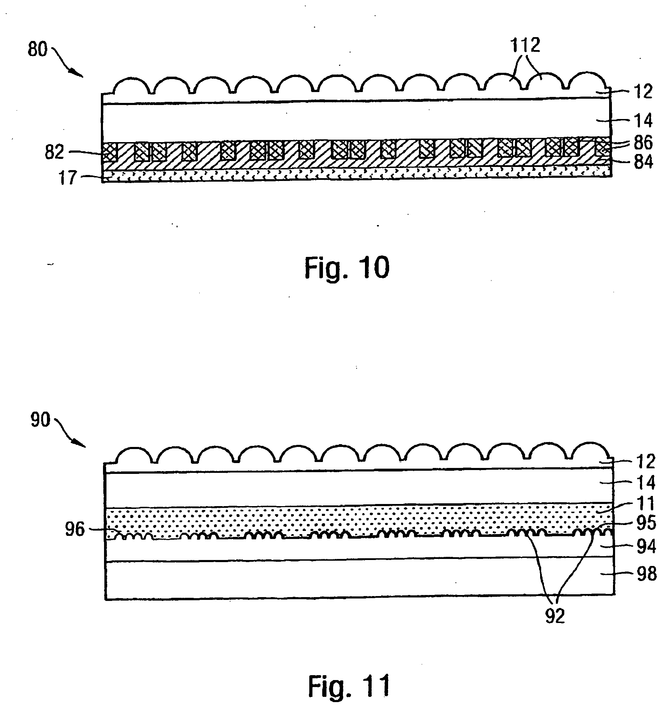

Eine weitere Möglichkeit zur Herstellung geprägter Mikrostrukturen wird nun anhand eines in Fig. 10 gezeigten Sicherheitselements 80 näher erläutert. In diesem Ausführungsbeispiel wird die Prägung in einem lasierend eingefärbten Prägelack 82, z. B. einem lasierend eingefärbten UV-Lack, vorgenommen, der auf ein transparentes Trägersubstrat 14, z. B. eine PET-Folie, aufgetragen ist. Die geprägten Mikrostrukturen 86 können anschließend z. B. in Form von Zeichen oder Mustern vorliegen. Auf der anderen Seite des Trägersubstrats 14 ist in einen strahlungshärtenden Lack, z. B. einen UV-Lack, eine Linsenanordnung 12 eingeprägt, die eine Vielzahl von in einem Raster angeordneten sphärischen linsenförmigen Elementen bzw. Mikrolinsen 112 aufweist.

Unter der Prägelackschicht 82 ist eine reflektierende Metallschicht aufgebracht, Bei Verwendung unterschiedlicher eingefärbter Prägelacke und Abdeckfarben lassen sich auf diese Weise insbesondere subtraktive und additive Farbeffekte erzeugen.

Der gewünschte Vergrößerungseffekt kann durch einen geringfügigen Unterschied in den Ortsfrequenzen der Mikrolinsen 112 und der geprägten Mikrostrukturen 86, der durch die oben beschriebenen Maßnahmen erreicht werden kann, erzeugt werden. Das erfindungsgemäße Sicherheitselement 80 zeigt entsprechend bei Betrachtung ein extrem vergrößertes dreidimensionales Bild der Mikrostrukturen 86, das eine charakteristische Tiefe sowie Bewegungseffekte aufweist und die Mikrostrukturen 86 als vergrößerte Zeichen- oder Musterfolge zeigt.

Zum Übertragen des Sicherheitselements 80 auf ein Sicherheitspapier bzw. zur Verbesserung der Haftung eines als Sicherheitsfaden ausgestalteten Sicherheitselements kann ferner ein aktivierbarer Kleber 17 auf der Metall- oder Farbschicht 84 aufgebracht sein.

In einer weiteren Variante zur Herstellung geprägter Mikrostrukturen kann ein Prägewerkzeug verwendet werden, das neben den Mikrostrukturen auch beugungsoptische Strukturen enthält. Dadurch lassen sich neuartige Kombinationen von z. B. diffraktiven bzw. hologrammartigen Gitterstrukturen und Mikrotext erzeugen.

Bei entsprechender lateraler Größe lassen sich die Mikrostrukturen (z. B. Buchstaben oder Zahlen) auch mit dem menschlichen Auge erkennen. Die vorstehend gezeigten Möglichkeiten zur Herstellung geprägter Mikrostrukturen eignen sich daher auch zur Erzeugung von (makroskopischem) Positiv- bzw. Negativtext, beispielsweise für die Verwendung eines solchen in Sicherheitsfäden. Dabei wird die Prägung in einem eingefärbten Lack vorgenommen, der auf ein transparentes oder eingefärbtes Trägersubstrat, z. B. eine PET-Folie, vollflächig aufgebracht ist. Die geprägten Mikrostrukturen liegen hierbei in einer Größenordnung vor, die mit dem menschlichen Auge noch erfasst werden kann.

Ein solcher Schichtaufbau kann zusätzlich mit einer Abdeckfolie oder einer Transferfolie versehen sein. Zur Übertragung des so erzeugten Sicherheitselements auf ein Sicherheitspapier bzw. zur Verbesserung der Haftung dieses Sicherheitselements bei einer Verwendung als Sicherheitsfaden kann ferner ein aktivierbarer Kleber auf das Trägersubstrat aufgebracht sein. Weiter ist denkbar, den eingefärbten Lack lediglich in Teilflächen aufzubringen und die Vorzüge der konventionellen Drucktechnik und der Prägetechnik zu kombinieren.

Außerdem ist die Verwendung von nicht diffraktiven Gitterstrukturen, insbesondere streuenden Gittern, wie z. B. Mattstrukturbildern, zur Herstellung der Mikrostrukturen denkbar.

Metallisierte, geprägte Microstrukturen dieser Art weisen allerdings den Nachteil auf, dass bei vollflächiger Metallisierung unter Umständen eine fast in allen Bereichen ähnlich hohe Lichtreflexion vorherrscht und damit der Kontrast der Mikrostrukturen im Vergleich zu den umgebenden, nicht geprägten Bereichen nicht optimal ist.

Zur Verbesserung des Kontrasts können daher neben oder zusätzlich zu den hologrammartigen Gitterstrukturen spezielle Oberflächenstrukturen verwendet werden, welche die Reflexionseigenschaften einer metallisierten Fläche gezielt absenken und deshalb einen dunklen Farbeindruck vermitteln (so genannte "diffractive black"-Strukturen).

Der prinzipielle Schichtaufbau eines derartige Mikrostrukturen aufweisenden Sicherheitselements wird nun am Beispiel eines Sicherheitselements 90 in Fig. 11 näher erläutert, bei dem eine Mikrostrukturanordnung mit geprägten Mikrostrukturen 92, z. B. in Form von nicht diffraktiven Gitterstrukturen, ausgebildet ist. Die geprägten Mikrostrukturen 92 sind in eine Prägelackschicht 94, z. B. eine UV-Lackschicht, eingeprägt und auf einem transparenten Trägersubstrat 98, z. B. einer PET-Folie, in der gleichen geometrischen Anordnung wie die Linsenanordnung 12 angeordnet. Dabei kann der Unterschied in der Ortsfrequenz des jeweiligen Rasters der Linsenanordnung und der Mikrostrukturanordnung zur Ausbildung eines ersten Echtheitsmerkmals geeignet gewählt werden.

Jede der geprägten Mikrostrukturen 92 bildet für sich genommen jeweils ein Zeichen oder Muster, das in Dimensionen vorliegt, die in etwa denen der Mikrolinsen der Linsenanordnung 12 entsprechen. Zur Erhöhung des Fälschungsschutzes ist in der auf die geprägten Mikrostrukturen aufgebrachten Metallschicht 95 als zweites Echtheitsmerkmal ferner eine Aussparung 96, z. B. in Form eines Motivs, vorgesehen. Die Metallschicht 95 stellt zudem eine leitfähige Schicht dar; die maschinell geprüft werden kann.

Das erfindungsgemäße Sicherheitselement 90 zeigt bei Betrachtung ein extrem vergrößertes dreidimensionales Bild der als nicht diffraktive Gitterstrukturen ausgebildeten Mikrostrukturen 92, das eine charakteristische Tiefe sowie Bewegungseffekte aufweist und die nicht diffraktiven Gitterstrukturen z. B. als eine Folge vergrößerter Mattstrukturbilder zeigt. Diesem Bild als zweidimensionales Bild überlagert kann der Betrachter die als Aussparung 96 vorliegende Information in Originalgröße erkennen.

Daneben konnen die erfindungsgemäßen Sicherheitselemente mit weiteren Schichten, insbesondere mit weiteren maschinenlesbaren Schichten kombiniert werden. Solche Schichten enthalten beispielsweise reflektierende, magnetische, elektrisch leitfähige, polarisierende, phasenschiebende oder lumineszierende Stoffe.

Um Magnetschichten zu verbergen, werden diese idealerweise zwischen zwei opake Schichten eingebettet. Sind auf dem Sicherheitselement bereits metallisierte Bereiche vorhanden, kann die Magnetschicht beispielsweise mithilfe einer Haftvermittlerschicht auf diese übertragen werden. Anschließend kann die Magnetschicht mittels einer weiteren Metallschicht, einer opaken Farbschicht mit hoher optischer Dichte oder einer Schicht, die z.B. Metallpigmente enthält, abgedeckt werden. Die Magnetbereiche können als durchgehende Bereiche entlang des Sicherheitselements oder in Form einer Codierung vorliegen.

Die elektrische Leitfähigkeit kann z. B. über eine durchgehende Metallschicht erreicht werden. Da die Stabilität von Metallschichten gegenüber mechanischen Beanspruchungen oft nicht ausreichend ist, können alternativ oder zusätzlich im Wesentlichen transparente, elektrisch leitfähige Beschichtungen vollflächig oder bereichsweise auf das Sicherheitselement aufgebracht werden. Diese Schichten haben den Vorteil, dass sie das optische Erscheinungsbild des Sicherheitselements nicht stören.

Es können aber auch farbige und/oder metallisch glänzende Beschichtungen verwendet werden. Bei Verwendung von Druckfarben mit Rußpigmenten wird eine damit hergestellte Schicht bevorzugt zwischen zwei opaken Schichten im Sicherheitselement eingebettet, um eine Beeinträchtigung des Erscheinungsbilds des Sicherheitselements zu vermeiden.

Daneben können an beliebiger Stelle im Schichtaufbau der erfindungsgemäßen Sicherheitselemente lumineszierende, insbesondere fluoreszierende oder phosphoreszierende Stoffe eingesetzt werden. Insbesondere können solche Stoffe in die Mikrolinsen bzw. Linsenstrukturen von Hohlspiegeln eingebracht werden. Die Mikrolinsen bzw. Linsenstrukturen sind, verglichen mit üblichen Druckfarben, verhältnismäßig dick (mehrere Mikrometer) und bieten daher ausreichend Raum für derartige Stoffe. Allerdings ist dabei zu berücksichtigen, dass die lumineszierenden Stoffe im Wesentlichen optisch transparent sein sollten.

Gemäß einer weiteren Ausgestaltung kann ein erfindungsgemäßes Sicherheitselement auch mit einer Schicht kombiniert werden, die phasenschiebende Eigenschaften aufweist. Dazu wird das Sicherheitselement z.B. mit einer Schicht aus flüssigkristallinem Material, das diese Eigenschaften aufweist, partiell beschichtet. Insbesondere werden metallisierte Bereiche entweder partiell in Form von Druckmustem mit orientierten Flüssigkristallen beschichtet oder das Sicherheitselement wird vollflächig mit Flüssigkristallen beschichtet, die eine doppelbrechende Eigenschaft aufweisen und deren Hauptachsen bereichsweise in unterschiedlichen Richtungen liegen. Damit kann durch Auflegen von Zirkular- oder Linearpolarisatoren ein sonst nicht sichtbares Muster zum Vorschein gebracht werden.

Alternativ kann ein Sicherheitselement auch mit polarisierenden Substanzen, wie z.B. cholesterischem flüssigkristallinem Material, beschichtet werden.

## Patentansprüche

1. Sicherheitselement zur Absicherung von Wertgegenständen mit
- wenigstens einem ersten Echtheitsmerkmal, wobei das erste Echtheitsmerkmal eine erste Anordnung mit einer Vielzahl von linsenförmigen fokussierenden Elementen, die in einem ersten Raster vorliegen, und eine zweite Anordnung mit einer Vielzahl von mikroskopischen Strukturen, die in einem zweiten Raster vorliegen, umfasst, wobei die erste und die zweite Anordnung derart angeordnet sind, dass sich die Ortsfrequenzen beider Raster geringfügig unterscheiden und die mikroskopischen Strukturen der zweiten Anordnung bei Betrachtung durch die linsenförmigen fokussierenden Elemente der ersten Anordnung infolge des Moiré-Effekts in Vergrößerung zu sehen sind, und
- einem zweiten Echtheitsmerkmal, das maschinell und/oder visuell prüfbar ist,
- wobei die mikroskopischen Strukturen geprägte Mikrostrukturen umfassen, die mit einer reflektierenden Metallschicht beschichtet sind, die das zweite Echtheitsmerkmal bereitstellt und die Aussparungen in Form von Zeichen, Mustern oder Codierungen aufweist oder in Form von Zeichen, Mustern oder Codierungen ausgebildet ist, und
- wobei die Vergrößerungswirkung der linsenförmigen fokussierenden Elemente der ersten Anordnung das zweite Echtheitsmerkmal nicht betrifft, so dass das zweite Echtheitsmerkmal durch die erste Anordnung des ersten Echtheitsmerkmals unbeeinflusst ist.

2. Sicherheitselement nach Anspruch 1, **dadurch gekennzeichnet, dass** das erste und zweite Raster des ersten Echtheitsmerkmals feste geometrische Beziehungen aufweisen.

3. Sicherheitselement nach Anspruch 1 oder 2, **dadurch gekennzeichnet, dass** das erste Raster und das zweite Raster des ersten Echtheitsmerkmals eine geringfügig unterschiedliche Rasterweite aufweisen.

4. Sicherheitselement nach Anspruch 1 oder 2, **dadurch gekennzeichnet, dass** das erste Raster und das zweite Raster des ersten Echtheitsmerkmals eine im Wesentlichen identische Rasterweite aufweisen und gegeneinander geringfügig gedreht angeordnet sind.

5. Sicherheitselement nach wenigstens einem der Ansprüche 1 bis 4, **dadurch gekennzeichnet, dass** die Rasterweite des ersten und zweiten Rasters zwischen ungefähr 3 µm und ungefähr 50 µm, vorzugsweise zwischen ungefähr 5 µm und ungefähr 35 µm, besonders bevorzugt zwischen ungefähr 10 µm und ungefähr 20 µm liegt.

6. Sicherheitselement nach wenigstens einem der Ansprüche 1 bis 5, **dadurch gekennzeichnet, dass** das zweite Echtheitsmerkmal eine maschinentesbare Schicht umfasst.

7. Sicherheitselement nach Anspruch 6, **dadurch gekennzeichnet, dass** die maschinenlesbare Schicht maschinenlesbare Merkmalstoffe, insbesondere reflektierende, magnetische, elektrisch leitfähige, polarisierende, phasenschiebende, phosphoreszierende, fluoreszierende oder sonstige lumineszierende Stoffe, enthält.

8. Sicherheitselement nach einem der Ansprüche 1 bis 7, **dadurch gekennzeichnet, dass** die erste und zweite Anordnung des ersten Echtheitsmerkmals derart angeordnet sind, dass die fokussierenden Elemente der ersten Anordnung und die geprägten Mikrostrukturen der zweiten Anordnung als Erhebungen ausgebildet sind, die in die gleiche Richtung zeigen.

9. Sicherheitselement nach einem der Ansprüche 1 bis 8, **dadurch gekennzeichnet, dass** die geprägten Mikrostrukturen Elemente umfassen, die in Form von sphärischen oder asphärischen Kalotten, Kegeln, Dreieckspyramiden, Trapezpyramiden, Kegelstümpfen, Pyramidenstümpfen oder dergleichen vorliegen, und/oder eine Basisfläche in Form von Zeichen, Mustern oder Codierungen aufweisen.

10. Sicherheitselement nach wenigstens einem der Ansprüche 1 bis 9, **dadurch gekennzeichnet, dass** die geprägten Mikrostrukturen in einen eingefärbten Prägelack, vorzugsweise einen eingefärbten opaken oder einen lasierend eingefärbten Prägelack, eingeprägt sind.

11. Sicherheitselement nach Anspruch 10, **dadurch gekennzeichnet, dass** der eingefärbte Prägelack ein Farbpigmente enthaltender strahlungshärtender Lack ist.

12. Sicherheitselement nach wenigstens einem der Ansprüche 1 bis 11, **dadurch gekennzeichnet, dass** die geprägten Mikrostrukturen auf einem eingefärbten Trägersubstrat angeordnet sind.

13. Sicherheitselement nach wenigstens einem der Ansprüche 1 bis 12, **dadurch gekennzeichnet, dass** die geprägten Mikrostrukturen auf der strukturierten Seite der zweiten Anordnung mit einer opaken Beschichtung, vorzugsweise einer Metallschicht oder einer opaken Farbschicht, versehen sind.

14. Sicherheitselement nach wenigstens einem der Ansprüche 1 bis 13, **dadurch gekennzeichnet, dass** die linsenförmigen Elemente der ersten Anordnung und gegebenenfalls die geprägten Mikrostrukturen der zweiten Anordnung kreisförmige oder elliptische Basisflächen aufweisen.

15. Sicherheitselement nach wenigstens einem der Ansprüche 1 bis 14, **dadurch gekennzeichnet, dass** die erste Anordnung eine Kombination von linsenförmigen Elementen unterschiedlicher Größe und Rasterweite umfasst.

16. Sicherheitselement nach wenigstens einem der Ansprüche 1 bis 15, **dadurch gekennzeichnet, dass** die linsenförmigen Elemente der ersten Anordnung und/oder die mikroskopischen Strukturen der zweiten Anordnung auf einem Trägersubstrat angeordnet sind.

17. Sicherheitselement nach wenigstens einem der Ansprüche 1 bis 16, **dadurch gekennzeichnet, dass** zwischen den linsenförmigen Elementen der ersten Anordnung und den mikroskopischen Strukturen der zweiten Anordnung eine Abstandsschicht und/oder eine Klebstoffschicht vorgesehen ist.

18. Sicherheitselement nach wenigstens einem der Ansprüche 1 bis 17, **dadurch gekennzeichnet, dass** die linsenförmigen Elemente der ersten Anordnung mit einer Schutzschicht versehen sind, wobei die Schutzschicht einen Brechungsindex aufweist, der sich um wenigstens 0,3 von dem Brechungsindex der linsenförmigen Elemente unterscheidet.

19. Sicherheitselement nach wenigstens einem der Ansprüche 1 bis 18, **dadurch gekennzeichnet, dass** das Sicherheitselement ein Gesamtdicke von weniger als 50 µm aufweist.

20. Sicherheitselement nach wenigstens einem der Ansprüche 1 bis 19, **dadurch gekennzeichnet, dass** das Sicherheitselement ein Sicherheitsfaden, ein Aufreißfaden, ein Sicherheitsband, ein Sicherheitsstreifen, ein Patch oder ein Etikett zum Aufbringen auf ein Sicherheitspapier, Wertdokument oder dergleichen ist.

21. Verfahren zum Herstellen eines Sicherheitselements nach wenigstens einem der Ansprüche 1 bis 20, bei dem
- ein erstes Echtheitsmerkmal durch Kombination einer ersten und einer zweiten Anordnung gebildet wird, wobei die erste Anordnung mit einer Vielzahl von linsenförmigen fokussierenden Elementen, die in einem ersten Raster vorliegen, über einer zweiten Anordnung mit einer Vielzahl von mikroskopischen Strukturen, die in einem zweiten Raster vorliegen, derart angeordnet wird, dass sich die Ortsfrequenzen beider Raster geringfügig unterscheiden und die mikroskopischen Strukturen der zweiten Anordnung bei Betrachtung durch die linsenförmigen fokussierenden Elemente der ersten Anordnung infolge des Moiré-Effektes in Vergrößerung zu sehen sind,
- wobei das erste Echtheitsmerkmal mit wenigstens einem zweiten Echtheitsmerkmal kombiniert wird, das maschinell und/oder visuell prüfbar ist,
- wobei die mikroskopischen Strukturen geprägte Mikrostrukturen umfassen, die mit einer reflektierenden Metallschicht beschichtet sind, die das zweite Echtheitsmerkmal bereitstellt und die Aussparungen in Form von Zeichen, Mustern oder Codierungen aufweist oder in Form von Zeichen, Mustern oder Codierungen ausgebildet ist, und
- wobei die Vergrößerungswirkung der linsenförmigen fokussierenden Elemente der ersten Anordnung das zweite Echtheitsmerkmal nicht betrifft, so dass das zweite Echtheitsmerkmal durch die erste Anordnung des ersten Echtheitsmerkmals unbeeinflusst ist.

22. Verfahren nach Anspruch 21, **dadurch gekennzeichnet, dass** die geprägten Mikrostrukturen in einen eingefärbten Prägelack, vorzugsweise einen eingefärbten opaken oder einen lasierend eingefärbten Prägelack, eingeprägt werden.

23. Verfahren nach Anspruch 22, **dadurch gekennzeichnet, dass** der eingefärbte Lack in einem ersten Schritt auf ein Trägersubstrat aufgetragen wird und in einem zweiten Schritt mit einem Prägewerkzeug derart geprägt wird, dass Bereiche unterschiedlicher Profilhöhe bzw. Profiltiefe entstehen.

24. Verfahren nach Anspruch 22 oder 23, **dadurch gekennzeichnet, dass** die geprägten Mikrostrukturen auf der strukturierten Seite der zweiten Anordnung mit einer opaken Beschichtung, vorzugsweise einer Metallschicht oder einer opaken Farbschicht, versehen werden.

25. Verfahren nach wenigstens einem der Ansprüche 21 bis 24, **dadurch gekennzeichnet, dass** zwischen den linsenförmigen Elementen der ersten Anordnung und den mikroskopischen Strukturen der zweiten Anordnung eine Abstandsschicht und/oder eine Klebstoffschicht vorgesehen wird.

26. Sicherheitspapier für die Herstellung von Sicherheits- oder Wertdokumenten, wie Banknoten, Schecks, Ausweiskarten, Urkunden oder dergleichen, das mit einem Sicherheitselement nach wenigstens einem der Ansprüche 1 bis 20 ausgestattet ist.

27. Sicherheitspapier nach Anspruch 26, **dadurch gekennzeichnet, dass** das Sicherheitspapier ein Trägermaterial aus Papier oder Kunststoff umfasst.

28. Wertgegenstand, wie Markenartikel, Wertdokument oder dergleichen, mit einem Sicherheitselement nach wenigstens einem der Ansprüche 1 bis 20.

29. Wertgegenstand nach Anspruch 28, **dadurch gekennzeichnet, dass** das Sicherheitselement in einem Fensterbereich des Wertgegenstands angeordnet ist.

## Claims

1. A security element for securing valuable articles, having
- at least one first authenticating feature, the first authenticating feature comprising a first arrangement, having a plurality of lens-shaped focusing elements that are present in a first grid, and a second arrangement, having a plurality of microscopic structures that are present in a second grid, the first and the second arrangement being disposed in such a way that the spatial frequencies of the two grids differ slightly and, as a result of the moiré effect, the microscopic structures of the second arrangement are seen magnified when viewed through the lens-shaped focusing elements of the first arrangement, and
- a second authenticating feature that is machine and/or visually verifiable,
- wherein the microscopic structures comprise embossed microstructures that are coated with a reflecting metal layer, that provides the second authenticating feature, and that exhibits apertures in the form of characters, patterns or codes, or is developed in the form of characters, patterns or codes, and
- wherein the magnification effect of the lens-shaped focusing elements of the first arrangement does not relate to the second authenticating feature, such that the second authenticating feature is uninfluenced by the first arrangement of the first authenticating feature.

2. The security element according to claim 1, **characterized in that** the first grid and second grid of the first authenticating feature exhibit fixed geometric relationships.

3. The security element according to claim 1 or 2, **characterized in that** the first grid and the second grid of the first authenticating feature exhibit a slightly different line screen.

4. The security element according to claim 1 or 2, **characterized in that** the first grid and the second grid of the first authenticating feature exhibit a substantially identical line screen and are disposed slightly rotated toward one another.

5. The security element according to at least one of claims 1 to 4, **characterized in that** the line screen of the first and second grid lies between approximately 3 µm and approximately 50 µm, preferably between approximately 5 µm and approximately 35 µm, particularly preferably between approximately 10 µm and approximately 20 µm.

6. The security element according to at least one of claims 1 to 5, **characterized in that** the second authenticating feature comprises a machine-readable layer.

7. The security element according to claim 6, **characterized in that** the machine-readable layer includes machine-readable feature substances, especially reflecting, magnetic, electrically conductive, polarizing, phase shifting, phosphorescent, fluorescent or other luminescent substances.

8. The security element according to any one of claims 1 to 7, **characterized in that** the first and second arrangement of the first authenticating feature are disposed in such a way that the focusing elements of the first arrangement and the embossed microstructures of the second arrangement are developed as elevations that point in the same direction.

9. The security element according to any one of claims 1 to 8, **characterized in that** the embossed microstructures comprise elements that are present in the form of spherical or aspherical caps, cones, triangular pyramids, trapezoidal pyramids, truncated cones, truncated pyramids or the like, and/or exhibit a base area in the form of characters, patterns or codes.

10. The security element according to at least one of claims 1 to 9, **characterized in that** the embossed microstructures are embossed in a colored embossing lacquer, preferably a colored opaque or a transparently colored embossing lacquer.

11. The security element according to claim 10, **characterized in that** the colored embossing lacquer is a radiation-curing lacquer containing color pigments.

12. The security element according to at least one of claims 1 to 11, **characterized in that** the embossed microstructures are disposed on a colored carrier substrate.

13. The security element according to at least one of claims 1 to 12, **characterized in that** the embossed microstructures on the structured side of the second arrangement are provided with an opaque coating, preferably a metal layer or an opaque ink layer.

14. The security element according to at least one of claims 1 to 13, **characterized in that** the lens-shaped elements of the first arrangement and, if applicable, the embossed microstructures of the second arrangement exhibit circular or elliptical base areas.

15. The security element according to at least one of claims 1 to 14, **characterized in that** the first arrangement comprises a combination of lens-shaped elements of differing size and line screen.

16. The security element according to at least one of claims 1 to 15, **characterized in that** the lens-shaped elements of the first arrangement and/or the microscopic structures of the second arrangement are disposed on a carrier substrate.

17. The security element according to at least one of claims 1 to 16, **characterized in that** a spacing layer and/or an adhesive layer is provided between the lens-shaped elements of the first arrangement and the microscopic structures of the second arrangement.

18. The security element according to at least one of claims 1 to 17, **characterized in that** the lens-shaped elements of the first arrangement are provided with a protective layer, the protective layer exhibiting a refractive index that differs from the refractive index of the lens-shaped elements by at least 0.3.

19. The security element according to at least one of claims 1 to 18, **characterized in that** the security element exhibits a total thickness of less than 50 µm.

20. The security element according to at least one of claims 1 to 19, **characterized in that** the security element is a security thread, a tear strip, a security band, a security strip, a patch or a label for application to a security paper, value document or the like.

21. A method for manufacturing a security element according to at least one of claims 1 to 20, in which
- a first authenticating feature is formed by combining a first and a second arrangement, the first arrangement, having a plurality of lens-shaped focusing elements present in a first grid, being disposed over a second arrangement, having a plurality of microscopic structures present in a second grid, in such a way that the spatial frequencies of both grids differ slightly and, as a result of the moiré effect, the microscopic structures of the second arrangement are seen magnified when viewed through the lens-shaped focusing elements of the first arrangement,
- the first authenticating feature being combined with at least one second authenticating feature that is machine and/or visually verifiable,
- wherein the microscopic structures comprise embossed microstructures that are coated with a reflecting metal layer, that provides the second authenticating feature, and that exhibits apertures in the form of characters, patterns or codes, or is developed in the form of characters, patterns or codes, and
- wherein the magnification effect of the lens-shaped focusing elements of the first arrangement does not relate to the second authenticating feature, such that the second authenticating feature is uninfluenced by the first arrangement of the first authenticating feature.

22. The method according to claim 21, **characterized in that** the embossed microstructures are embossed in a colored embossing lacquer, preferably a colored opaque or a transparently colored embossing lacquer.

23. The method according to claim 22, **characterized in that**, in a first step, the colored lacquer is applied to a carrier substrate, and in a second step, is embossed with an embossing die in such a way that areas of differing profile height or profile depth are created.

24. The method according to claim 22 or 23, **characterized in that** the embossed microstructures on the structured side of the second arrangement are provided with an opaque coating, preferably a metal layer or an opaque ink layer.

25. The method according to at least one of claims 21 to 24, **characterized in that** a spacing layer and/or an adhesive layer are provided between the lens-shaped elements of the first arrangement and the microscopic structures of the second arrangement.

26. A security paper for manufacturing security or value documents, such as banknotes, checks, identity cards, certificates or the like, that are furnished with a security element according to at least one of claims 1 to 20.

27. The security paper according to claim 26, **characterized in that** the security paper comprises a carrier material made of paper or plastic.

28. A valuable article, such as a branded article, value document or the like, having a security element according to at least one of claims 1 to 20.

29. The valuable article according to claim 28, **characterized in that** the security element is disposed in a window area of the valuable article.

## Revendications

1. Elément de sécurité pour sécuriser des objets de valeur, comportant
- au moins une première caractéristique d'authenticité, la première caractéristique d'authenticité comportant un premier arrangement, avec un grand nombre d'éléments de focalisation qui se trouvent dans une première trame, et un deuxième arrangement avec un grand nombre de structures microscopiques qui se trouvent dans une deuxième trame, le premier et le deuxième arrangements étant disposés de façon que les fréquences spatiales des deux trames présentent une légère différence, et que les structures microscopiques du deuxième arrangement, lors d'une observation à travers les éléments de focalisation du premier arrangement en forme de lentille, soient vues agrandies en conséquence de l'effet de moiré, et
- une deuxième caractéristique d'authenticité, qui peut être vérifiée par une machine et/ou visuellement,
- les structures microscopiques comprenant des microstructures estampées qui sont revêtues d'une couche métallisée réfléchissante, qui représente le deuxième caractéristique d'authenticité et qui présente des renfoncements sous forme de caractères, de modèles ou de codages,
- l'effet de l'agrandissement des éléments de focalisation du premier arrangement en forme de lentille ne concernant pas le deuxième caractéristique d'authenticité, de sorte que le deuxième caractéristique d'authenticité n'est pas influencée par le premier arrangement de la première caractéristique d'authenticité.

2. Elément de sécurité selon la revendication 1, **caractérisé en ce que** la première et la deuxième trame de la première caractéristique d'authenticité présentent des relations géométriques fixes.

3. Elément de sécurité selon la revendication 1 ou 2, **caractérisé en ce que** la première trame et la deuxième trame de la première caractéristique d'authenticité présentent des lignages de trame légèrement différents.

4. Elément de sécurité selon la revendication 1 ou 2, **caractérisé en ce que** la première trame et la deuxième trame de la première caractéristique d'authenticité présentent des lignages de trame pour l'essentiel identiques et sont disposées avec une légère rotation l'une par rapport à l'autre.

5. Elément de sécurité selon au moins l'une des revendications 1 à 4, **caractérisé en ce que** le lignage de trame de la première et de la deuxième trames est compris entre environ 3 µm et environ 50 µm, de préférence entre environ 5 µm et environ 35 µm, et d'une manière particulièrement préférée entre environ 10 µm et environ 20 µm.

6. Elément de sécurité selon au moins l'une des revendications 1 à 5, **caractérisé en ce que** la deuxième caractéristique d'authenticité comprend une couche lisible par une machine.

7. Elément de sécurité selon la revendication 6, **caractérisé en ce que** la couche lisible par une machine contient des substances formant caractéristiques lisibles par une machine, en particulier des substances réfléchissantes, magnétiques, conductrices de l'électricité, polarisantes, à effet de déphasage, phosphorescentes, fluorescentes, ou d'autres substances luminescentes.

8. Elément de sécurité selon l'une des revendication 1 à 7, **caractérisé en ce que** le premier et le deuxième arrangements de la première caractéristique d'authenticité sont disposés de telle sorte que les éléments de focalisation du premier arrangement et les microstructures estampées du deuxième arrangement soient configurés comme des surélévations qui sont dirigées dans la même direction.

9. Elément de sécurité selon au moins l'une des revendication 1 à 8, **caractérisé en ce que** les microstructures estampées comprennent des éléments qui se présentent sous forme de calottes sphériques ou asphériques, de cônes, de pyramides à base triangulaire, de pyramides à base trapézoïdale, de troncs de cône, de troncs de pyramide ou analogues, et/ou présentent une surface de base sous forme de caractères, de modèles ou de codages.

10. Elément de sécurité selon au moins l'une des revendications 1 à 9, **caractérisé en ce que** les microstructures estampées sont estampées dans un vernis d'estampage coloré dans la masse, de préférence dans un vernis d'estampage opaque coloré dans la masse, ou transparent et coloré dans la masse.

11. Elément de sécurité selon la revendication 10, **caractérisé en ce que** le vernis d'estampage coloré dans la masse est un vernis durcissant sous l'effet d'un rayonnement, contenant des pigments colorés.

12. Elément de sécurité selon au moins l'une des revendications 1 à 11, **caractérisé en ce que** les microstructures estampées sont disposées sur un substrat formant support, coloré dans la masse.

13. Elément de sécurité selon au moins l'une des revendications 1 à 12, **caractérisé en ce que** les microstructures estampées sont, sur la face structurée du deuxième arrangement, pourvues d'un revêtement opaque, de préférence d'une couche métallisée ou d'une couche colorée opaque.

14. Elément de sécurité selon au moins l'une des revendications 1 à 13, **caractérisé en ce que** les éléments en forme de lentille du premier arrangement et éventuellement les microstructures estampées du deuxième arrangement présentent une surface de base circulaire ou elliptique.

15. Elément de sécurité selon au moins l'une des revendications 1 à 14, **caractérisé en ce que** le premier arrangement comprend une combinaison d'éléments en forme de lentille ayant différentes tailles et différents lignages de trame.

16. Elément de sécurité selon au moins l'une des revendications 1 à 15, **caractérisé en ce que** les éléments en forme de lentille du premier arrangement et/ou les structures microscopiques du deuxième arrangement sont disposés sur un substrat formant support.

17. Elément de sécurité selon au moins l'une des revendications 1 à 16, **caractérisé en ce qu'**entre les éléments en forme de lentille du premier arrangement et les structures microscopiques du deuxième arrangement sont prévues une couche d'écartement et/ou une couche adhésive.

18. Elément de sécurité selon au moins l'une des revendications 1 à 17, **caractérisé en ce que** les éléments en forme de lentille du premier arrangement sont pourvus d'une couche de protection, la couche de protection présentant un indice de réfraction qui s'écarte d'au moins 0,3 de l'indice de réfraction des éléments en forme de lentille.

19. Elément de sécurité selon au moins l'une des revendications 1 à 18, **caractérisé en ce que** l'élément de sécurité a une épaisseur totale inférieure à 50 µm.

20. Elément de sécurité selon au moins l'une des revendications 1 à 19, **caractérisé en ce que** l'élément de sécurité est une filigrane de sécurité, un fil d'arrachage, une bande de sécurité, une bandelette de sécurité, une pastille ou une étiquette, pour application sur un papier de sécurité, un document de valeur ou analogues.

21. Procédé de fabrication d'un élément de sécurité selon au moins l'une des revendications 1 à 20, dans lequel
- une première caractéristique d'authenticité est formée par une combinaison d'un premier et d'un deuxième arrangements, le premier arrangement, avec un grand nombre d'éléments de focalisation en forme de lentille qui sont présents dans une première trame, étant disposé au-dessus d'un deuxième arrangement avec un grand nombre de structures microscopiques qui sont présentes dans une deuxième trame, de telle sorte que les fréquences spatiales des deux trames présentent une faible différence, et que les structures microscopiques du deuxième arrangement, lors d'une observation à travers les éléments de focalisation en forme de lentille du premier arrangement, soient vues agrandies en conséquence de l'effet de moiré,
- la première caractéristique d'authenticité étant combinée à au moins une deuxième caractéristique d'authenticité, qui peut être vérifiée à la machine et/ou à l'oeil nu,
- les structures microscopiques comprenant des microstructures estampées qui sont revêtues d'une couche métallisée réfléchissante, qui représente le deuxième caractéristique d'authenticité et qui présente des renfoncements sous forme de caractères, de modèles ou de codages, et
- l'effet de l'agrandissement des éléments de focalisation du premier arrangement en forme de lentille ne concernant pas le deuxième caractéristique d'authenticité, de sorte que le deuxième caractéristique d'authenticité n'est pas influencée par le premier arrangement de la première caractéristique d'authenticité.

22. Procédé selon la revendication 21, **caractérisé en ce que** les microstructures estampées sont estampées dans un vernis d'estampage coloré dans la masse, de préférence un vernis d'estampage opaque coloré dans la masse ou transparent coloré dans la masse.

23. Procédé selon la revendication 22, **caractérisé en ce que** le vernis coloré dans la masse est, dans une première étape, appliqué sur un substrat formant support, et, dans une deuxième étape, est estampé à l'aide d'un outil d'estampage de façon qu'il se crée des domaines ayant différentes hauteurs de profil ou différentes profondeurs de profil.

24. Procédé selon la revendication 22 ou 23, **caractérisé en ce que** les microstructures estampées sont, sur la face structurée du deuxième arrangement, pourvues d'un revêtement opaque, de préférence une couche métallisée ou une couche colorée opaque.

25. Procédé selon au moins l'une des revendications 21 à 24, **caractérisé en ce qu'**entre les éléments en forme de lentille du premier arrangement et les structures microscopiques du deuxième arrangement sont prévues une couche d'écartement et/ou une couche adhésive.

26. Papier de sécurité pour la fabrication de documents de sécurité ou de valeur, tels que des billets de banque, des chèques, des cartes d'identité, des certificats ou analogues, qui est muni d'un élément de sécurité selon au moins l'une des revendications 1 à 20.

27. Papier de sécurité selon la revendication 26, **caractérisé en ce que** le papier de sécurité comprend un matériau support en papier ou en plastique.

28. Objet de valeur tel qu'un article de marque, un document de valeur ou analogues, comportant un élément de sécurité selon au moins l'une des revendications 1 à 20.

29. Objet de valeur selon la revendication 28, **caractérisé en ce que** l'élément de sécurité est disposé dans un domaine formant fenêtre de l'objet de valeur.
